**Europäisches Patentamt**

**European Patent Office**

**Office européen des brevets**

(11) Numéro de publication : **0 536 184 B1**

# (12) FASCICULE DE BREVET EUROPEEN

(45) Date de publication du fascicule du brevet :
**10.08.94 Bulletin 94/32**

(21) Numéro de dépôt : **91910960.3**

(22) Date de dépôt : **14.06.91**

(86) Numéro de dépôt international :
**PCT/FR91/00478**

(87) Numéro de publication internationale :
**WO 92/00529 09.01.92 Gazette 92/02**

(51) Int. Cl.⁵ : **G01S 3/14,** G01S 3/02,
F41G 3/22

(54) **PROCEDE ET DISPOSITIF DE DETERMINATION D'UNE ORIENTATION LIEE A UN SYSTEME MOBILE, NOTAMMENT DE LA LIGNE DE VISEE DANS UN VISEUR DE CASQUE.**

(30) Priorité : **29.06.90 FR 9008230**

(43) Date de publication de la demande :
**14.04.93 Bulletin 93/15**

(45) Mention de la délivrance du brevet :
**10.08.94 Bulletin 94/32**

(84) Etats contractants désignés :
**AT BE CH DE DK ES FR GB GR IT LI LU NL SE**

(56) Documents cités :
**EP-A- 0 021 906**
**EP-A- 0 363 619**
**DE-A- 3 326 254**
**US-A- 4 287 809**
**US-A- 4 688 037**
**US-A- 4 768 028**

(73) Titulaire : **SEXTANT AVIONIQUE**
**5,7, rue Jeanne Braconnier**
**Parc Tertiaire**
**F-92360 Meudon-la-Forêt (FR)**

(72) Inventeur : **ZIMMER, Pierre**
**26, allée du Béarn**
**F-33160 S.-Médard-en-Jalles (FR)**
Inventeur : **CORDONNIER, Alain**
**62, rue Malbec**
**F-33800 Bordeaux (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

# Description

La présente invention se rapporte à la détermination d'une orientation liée à un système mobile, par exemple à un viseur de casque et a plus particulièrement pour objet un procédé, et le dispositif correspondant, de détermination d'une orientation liée à un système mobile permettant d'obtenir une grande précision.

Le problème consiste à repérer avec précision la direction d'un axe orienté sans avoir de contact matériel avec lui, en particulier dans les systèmes viseurs de casque utilisés dans les avions de combat ou les hélicoptères. Le fonctionnement d'un tel système est rappelé brièvement ci-après : par un dispositif collimateur annexe, le pilote voit, à travers une glace semi-réfléchissante solidaire du casque et interposée sur un axe de vision, l'image d'un réticule projeté à l'infini en superposition avec la scène extérieure. Lorsqu'il veut désigner une cible, le pilote amène ce réticule à coïncider avec la cible et signale que la coïncidence est réalisée au moyen par exemple d'une commande par bouton poussoir prévue à cet effet.

A condition de repérer, au moment de la signalisation, la position exacte du casque, il est possible de déterminer par rapport à l'avion, la direction de visée et de désigner l'objectif à un système d'arme, ou de pointer dans cette direction un système optique ou autre.

On connaît notamment par le brevet français n° 79 14441 un dispositif de mesure d'orientation, notamment pour système viseur de casque, dans lequel, pour ramener la ligne de visée déterminée par la position du casque du pilote dans un repère lié à l'aéronef, un capteur de position constitué de trois bobines électromagnétiques orthogonales est placé sur le casque ; par ailleurs, en un point fixe de la cabine, sont placées trois autres bobines électromagnétiques, formant un émetteur ou "radiateur" selon la terminologie en usage dans le domaine. Le procédé consiste alors à faire passer successivement, dans chaque bobine de l'émetteur (formant le trièdre fixe), un courant électrique. Ces courants font apparaître successivement, trois champs magnétiques y associés qui sont captés par les bobines du capteur (formant le trièdre mobile lié au casque).

Pour chaque champ magnétique émis les trois composantes orthogonales correspondantes sont captées dans les bobines du capteur. Les neuf composantes résultantes permettent alors de trouver la transformation (rotation) permettant de passer du trièdre mobile au trièdre fixe. En effet, ces neuf composantes dépendent :
- de la position du capteur dans l'espace ;
- de l'orientation du capteur.

En fait, la transformation résultant d'une telle méthode peut être assez différente de la transformation des coordonnées permettant de passer effectivement du trièdre de référence mobile au trièdre de référence fixe par rapport a l'aéronef, notamment du fait que l'on utilise des champs magnétiques. En effet, ces champs peuvent être notablement perturbés du fait de tous les éléments métalliques de l'environnement, qui créent des réflexions d'ondes magnétiques dans la cabine. Ce défaut est mentionné par exemple dans le système décrit dans le brevet US 4 287 809 qui prévoit de le résoudre en effectuant des mesures préalables. De plus, des défauts inhérents à la réalisation des bobines d'émission ou de réception magnétiques créent également des perturbations.

La détermination d'une direction en utilisant les lois de l'électromagnétisme en espace libre n'est donc pas possible quand l'espace considéré est la cabine de pilotage d'un aéronef. C'est pourquoi certains dispositifs connus prévoient, avant chaque mesure, la mise en mémoire de mesures préalables et la comparaison de mesures effectuées à un instant donné avec les mesures mises en mémoire afin de déterminer la rotation qui fait passer du trièdre fixe au trièdre mobile. Une telle méthode nécessite la mise en mémoire d'une quantité très importante de mesures qui doivent être reprises intégralement dès que des paramètres tels que, par exemple, la position exacte de l'émetteur mobile par rapport à la ligne de visée, changent.

L'invention a pour objet un procédé selon la revendication 1, et le dispositif selon la revendication 14, de détermination d'une orientation dans un système mobile permettant d'utiliser en fonctionnement le même procédé de mesure que précédemment, mais en évitant les défauts sus-mentionnés.

Pour cela, dans une phase préalable, une modélisation prenant en compte les perturbations notamment magnétiques dans la cabine dans laquelle est placé le système de détection, est établie à partir d'orientations particulières connues du capteur mobile ou à partir d'orientations particulières connues de la ligne de visée et pour chaque orientation à partir d'un ensemble de positions de m, origine du repère constitué par le capteur mobile. Cette phase permet d'approcher à partir de mesures réelles les relations complexes entre position et orientation dues aux réflexions des champs magnétiques et aux limites physiques de l'émetteur et du capteur et conduit à la détermination préalable d'une fonction de modélisation globale tenant compte des effets perturbateurs. Cette phase préalable, éventuellement complétée par une initialisation permet alors en fonctionnement de déterminer directement l'orientation associée à une position quelconque du système mobile, à partir des mesures expérimentales réelles.

Selon l'invention, un procédé de détermination d'une orientation liée à un système mobile dans un espace déterminé, utilisant un système magnétique de détection de position et d'orientation comportant un émetteur formé de trois bobines orthogonales ayant une position fixe dans l'espace déterminé et un capteur formé de trois bobines orthogonales fixé au système mobile, r étant la distance entre l'origine du repère émetteur et l'origine du repère capteur, un cycle de détection consistant à émettre successivement dans les trois bobines de l'émetteur et à mesurer les composantes de champ générées dans les bobines du récepteur, est caractérisé en ce qu'une phase préalable de modélisation de l'espace déterminé consiste à effectuer des mesures des champs magnétiques dans le capteur pour un ensemble de positions connues du système mobile par rapport à un repère dit repère cartographique, des paramètres de modélisation déduits des mesures de référence en chaque point étant calculés pour en déduire la rotation relative du capteur dans le repère cartographique des mesures de référence, et en ce que, en cours d'utilisation, l'orientation courante du système mobile est déterminée directement à partir des paramètres de modélisation constituant une fonction compacte de modélisation position des effets perturbateurs, fonction de la position.

L'invention a également pour objet le dispositif destiné à la mise en oeuvre de ce procédé.

L'invention sera mieux comprise et d'autres caractéristiques apparaîtront à l'aide de la description qui suit en référence aux figures annexées.

- La figure 1 est un schéma synoptique du dispositif selon l'invention.
- La figure 2 illustre les différentes étapes du procédé selon l'invention.

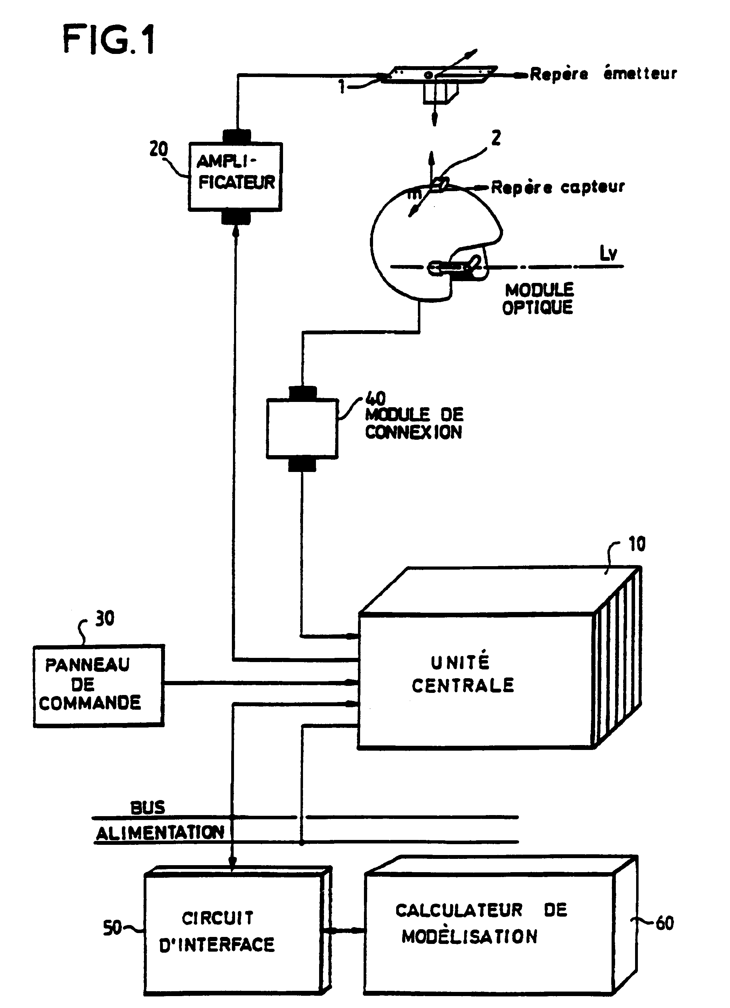

La figure 1 représente schématiquement un émetteur 1 qui comporte trois bobines disposées selon un trièdre trirectangle ; cet émetteur est placé en un point fixe d'un espace donné et, dans l'exemple décrit, cet espace est la cabine de pilotage d'un aéronef ; une unité centrale 10, qui fait partie d'un ensemble de matériel électronique embarqué, délivre un signal électrique d'excitation successivement aux trois bobines de l'émetteur 1, au cours de cycles successifs, via un dispositif amplificateur 20 sur commande à partir d'un panneau de commande 30.

Un capteur 2, disposé en phase de vol sur le casque du pilote de l'avion et formé également de trois bobines disposées selon un trièdre trirectangle, est également relié à l'unité centrale 10 via un module de connexion 40 ; ce capteur peut changer de place dans l'espace donné, en phase de vol selon les mouvements de tête du pilote et en phase préalable via un robot, pour occuper des positions prédéterminées. L'unité centrale 10 comporte un organe de mesure qui reçoit du capteur 2, au cours de chaque cycle de mesure, neuf signaux, en 3 fois 3 signaux, qui sont les signaux induits par l'alimentation successive de chacune des bobines de l'émetteur 1, dans chacune des bobines du capteur 2. Les amplitudes de ces neuf signaux constituent les neuf valeurs d'une matrice carrée de dimension 3x3. Le problème est alors de déterminer, à l'aide des lois de l'électromagnétisme, la transformation, i.e. la rotation, qui permet de passer du repère mobile formé par le capteur 2 au repère avion.

Par convention l'origine du repère formé par l'émetteur 1 est le point 0, la distance Om de l'émetteur 1 au capteur 2 est appelée r, avec $\overrightarrow{Om}$ /Om = $\vec{u}$ où $\vec{u}$ est le vecteur unité dans la direction Om avec pour projections x, y, z dans le trièdre fixe.

Si au point m origine du repère formé par le capteur une première mesure est effectuée, une matrice de neuf composantes P est obtenue ; si une seconde mesure est effectuée, avec une orientation différente du capteur et la même origine m, une seconde matrice M de neuf composantes est obtenue ; la matrice M peut s'écrire :

$$M = R.P.$$

où R est une matrice qui correspond à une rotation pure, si bien que :

$$^tR = R^{-1}$$

ce qui exprime que la matrice transposée $^tR$ d'une matrice rotation est égale à son inverse $R^{-1}$ ; donc le produit de la transposée $^tM$ de M par M s'écrit :

$$^tMM = {^tP.^tR.R.P} = {^tP.R^{-1}.R.P} = {^tP.P}$$

Le produit d'une matrice de mesure transposée avec la matrice elle-même est donc en principe invariant en un point m donné, quelle que soit la rotation du repère ; la matrice produit est de plus symétrique.

Théoriquement P et $^tM.M$ peuvent être exprimés en fonction de r, x, y, z à l'aide des équations de Maxwell caractérisant les lois de propagation électromagnétique ; en réalité ce n'est pas possible car l'émetteur et le capteur ne sont pas des dipôles parfaits, du fait que l'espace de la cabine n'est pas un espace libre, et que le casque porte des masses perturbatrices mobiles en même temps que lui.

Comme indiqué ci-dessus, pour résoudre ce problème, le procédé selon l'invention consiste à établir une modélisation préalable à partir de mesures réelles effectuées pour des positions et orientations prédéterminées connues du capteur (ou d'une ligne de visée qui lui est liée).

Pour cela, dans une phase préalable, l'unité centrale commande des mesures systématiques, effectuées, dans une première étape, en conservant toujours la même orientation à un capteur, 2, et cela selon un maillage constitué par un ensemble de points m de la cabine où peut se trouver le capteur 2 lorsqu'il est placé sur le casque du pilote à son poste de pilotage. Un ensemble de matrices de mesures de dimensions 3 sur 3 associé à l'ensemble des points m est donc obtenu. Ces matrices sont transmises, via un circuit d'interface 50, à la mémoire d'un calculateur 60 dit de modélisation en temps différé pour y être stockées et traitées. Ces mesures peuvent être effectuées avec le récepteur seul, dit alors capteur de cartographie magnétique, déplacé par un robot, c'est-à-dire sans le casque et le pilote. Ces mesures permettent donc d'établir une "cartographie" magnétique du volume dans lequel peut se trouver le capteur 2, pour une orientation particulière de ce capteur. De préférence ce relevé est effectué selon un maillage régulier dans les trois axes, avec un pas de 3 à 4cm.

Ensuite d'autres mesures sont effectuées, toujours avec le capteur de cartographie seul, mais avec d'autres orientations mécaniquement connues de ce capteur, en plusieurs points régulièrement espacés.

Si P est identifiée à la matrice de mesure obtenue lorsque les axes des bobines du capteur coïncident avec le repère de la cartographie, c'est-à-dire le repère fixe du robot directement lié au repère avion, une fonction globale reliant les composantes de P aux composantes de $^tMM$ est recherchée à partir des matrices de mesures correspondant à la première orientation. Cette fonction traduit donc les effets perturbateurs liés au déplacement du capteur dans la cabine, le capteur étant maintenu dans une orientation fixe. Pour cela, dans un mode de réalisation, cette étape du procédé consiste à rechercher 9 relations polynomiales optimum liant chaque composante de la matrice P (à neuf composantes) aux 6 composantes de la matrice symétrique $^tMM$. Les coefficients des monômes formant les 9 polynômes constituent la fonction $F_p$ recherchée. La résolution est facilitée par l'homogénéisation suivante :

$r^4P = F_p(r^7.^tMM)$, où $r = Om$. En effet, les champs magnétiques décroissant en $1/r^3$, un produit matriciel du type $^tMM$ décroît en $1/r^6$ ; pour rechercher une fonction reliant P à $^tMM$, il est intéressant d'homogénéiser en dimension les deux entités à relier, et de leur trouver une dimension commune favorable. La dimension la plus favorable est la distance r.

La meilleure approximation de r est donnée par la valeur de la racine $6^e$ de la trace de la matrice $^tMM$, résultant du calcul dans les conditions dipolaires.

Après homogénéisation comme indiqué ci-dessus, on identifie chaque composante de la matrice $r^4P$ à un polynôme fonction des termes de la matrice $r^7$ $^tMM$, par régression linéaire sur les 6 termes de $r^7$ $^tM.M$ en prenant pour régresseurs $e_k$ tous les produits de degré au plus égal à 3 calculés en un point m à partir de la matrice de mesure M en ce point. Les produits de degré 1 sont les six termes $r^7$ $^tMM$, les produits de degré 2 sont tous les produits de deux termes de $^tMM$, y compris les termes au carré etc... Jusqu'à l'ordre 3, pour les 6 termes de $r^7$ $^tMM$ résultant d'une matrice de mesure M au point m, il y a k = 84 régresseurs $e_k$. Si n mesures donnant chacune une matrice M ont été établies en n points m, chaque composante de $r^4(P)$, $Pj$ (j = 1 à 9) est identifiée à n polynômes fonction chacun d'un ensemble de régresseurs différent $(E)_i = (e_1, e_2, ... e_k)_i$, i = 1 à n calculés à partir des composantes de $r^7$ $^tMM$, et des coefficients $(a_0, a_1, ... a_k)_j$ recherchés pour cette composante :

$$P_j = a_0 + a_1e_1 + ... a_ke_k.$$

Les coefficients sont obtenus en résolvant, au sens des moindres carrés selon la méthode dite de GRAM SCHMIDT, les 9 systèmes indépendants, P = E.A, où E est la matrice ligne définie par les k régresseurs calculés pour chaque point m de la cartographie (E a k colonnes et n lignes). A est la matrice colonne formée des coefficients $(a_0 ... a_k)_j$ de j = 1 à 9 recherchés, et P est la matrice colonne constituée de la valeur mesurée de cette composante Pj répétée n fois.

L'exploitation directe des 9 ensembles de coefficients $(a_0 ... a_k)_1 ... (a_0 ... a_k)_9$ conduit à une première approximation Mc de la matrice cartographie P et donc des trois angles $G_1$ (gisement), $S_1$ (site) et $R_1$ (roulis) caractéristiques de la rotation du capteur par rapport au repère de la cartographie, par la relation M = R.Mc.

Puis dans une étape suivante, à partir des mesures effectuées en plusieurs points dans diverses orientations du capteur, une fonction globale $F_r$ est recherchée telle que $(G_2, S_2, R_2) = F_r(G_1, S_1, R_1, ^tMM)$, $(G_2, S_2, R_2)$ étant des angles vrais. Cette fonction globale traduit les effets perturbateurs induits par la rotation du capteur.

Cette étape consiste donc à rechercher 3 relations polynomiales optimum entre d'une part chaque angle vrai $(G_2, S_2, R_2)$ et d'autre part les trois angles approximés correspondants résultant de la mesure $(G_1, S_1, R_1)$ calculés précédemment et les différentes positions, en rotation, du repère capteur, c'est-à-dire les 6 composantes de $r^7$ $^tM.M$.

La méthode utilisée est analogue à celle utilisée pour rechercher Fp, c'est-à-dire que l'on procède par régression linéaire sur les 6 termes de $r^7$ $^tMM$ et les 3 termes $G_1, S_1, R_1$ en prenant pour regresseurs tous les produits de degré au plus égal à 3, c'est-à-dire une constante et les produits de degré 1, $G_1, S_1, R_1$ et les 6 termes de $^tMM$, les produits de degré 2 qui sont les précédents élevés au carré et les termes croisés de type $G_1S_1$, $G_1R_1$ etc... $(G_1)$ $(^tMM)_{ij}$ ... $(R_1)$ $(^tMM)_{ij}$ etc.

Le degré étant limité à 3, on est conduit à calculer 220 régresseurs.

L'exploitation directe des 3 ensembles de coefficients $a_i$ formant les paramètres de modélisation issus de cet algorithme de modélisation permet alors d'obtenir, avec une très grande précision, l'orientation du capteur dans le repère de la cartographie, et cela à partir des angles approximés dans une phase précédente, $G_1, S_1, R_1$.

Une fois effectuées les opérations de cartographie décrites ci-dessus dans la cabine du porteur, et après que les mesures de cartographie aient été mises en mémoire dans la mémoire de l'ensemble 60 calculateur de modélisation en temps différé, les paramètres de modélisation issus des algorithmes de modélisation décrits ci-dessus sont mis en mémoire dans l'unité centrale embarquée 10. Puis des mesures sont effectuées après que le casque ait été réglé (réglage de l'optique, réglage de sa fixation sur la tête du pilote etc...).

Si M est alors une matrice de mesures correspondant aux composantes de champ magnétique détectées dans le repère formé par le capteur fixé au casque lors de l'émission successive des trois bobines de l'émetteur fixe pour une position du casque et donc du repère mobile, le produit $^tM.M$ est calculé et la mesure des angles du capteur dans le repère de cartographie, Mc, peut alors être calculée directement :

La rotation R du capteur lié au casque par rapport au capteur de cartographie est alors déterminée par :
$$R = McM^{-1}.$$

La position du capteur étant alors fixée de manière précise, il est possible d'effectuer rapidement, si l'on connaît la matrice de rotation I de la ligne de visée par rapport au capteur, la transformation permettant de passer du repère capteur au repère cartographique lié au repère avion, notamment pour donner à un système de tir la direction de tir déterminée à partir du viseur de casque.

L'équation de la ligne de visée Lv dans le repère lié au porteur est alors obtenue de la manière suivante : $Lv = RI^{-1}$ où $R = McM^{-1}$, soit $Lv = McM^{-1}I^{-1}$

Mais en règle générale une étape d'initialisation de la ligne de visée ou alignement initial, doit être prévue, car les diverses possibilités de réglage offertes à l'utilisateur ne permettent pas de connaître a priori l'orientation de la ligne de visée dans le repère du capteur sur le casque. Pour cela une mesure capteur est acquise par le dispositif quand le pilote vise une direction prédéfinie liée au porteur, par exemple quand le pilote vise un réticule colimaté. Soit Lvo cette direction prédéfinie dite d'initialisation, et soit Mo la mesure capteur lors de cette phase d'initialisation ; la mesure correspondante Mco dans le repère de cartographie est calculée et on écrit la matrice d'initialisation : $I^{-1} = McoM_o^{-1}$.

De plus, lorsque le repère de cartographie n'est pas celui du porteur, il est nécessaire d'effectuer un changement de repère, dit "harmonisation", caractérisé par une matrice d'harmonisation H.
et on a alors :
$$Lv = HRi \ H^{-1}Lvo$$

ou encore $Lv = H(McM^{-1})(MoMc_o^{-1})H^{-1}Lvo$.

Les termes R et I devraient pouvoir être approximés avec précision à l'aide de la fonction $F_r$ constituée des paramètres de modélisation décrite précédemment. En pratique l'application de cette fonction à cette étape du procédé peut s'avérer inefficace du fait des éléments perturbants liés au casque, comme par exemple les tubes cathodiques.

En conséquence, une étape de compensation des éléments perturbants liés au casque est également mise en oeuvre, selon la même approche que celle décrite ci-dessus (pour tenir compte des éléments perturbants liés à la cabine ou dus aux défauts de l'émetteur ou du capteur). Pour cela, un ensemble de mesures est effectué, avec le casque, en plusieurs points régulièrement espacés et dans diverses orientations, mécaniquement connues, du casque, l'une de ces orientations coïncidant avec l'orientation approximative de la direction de visée dite d'initialisation Lvo.

L'application de la première fonction Fp permet de déterminer une première approximation de I et de chaque rotation capteur associée aux diverses orientations, et ainsi permet de définir une première approximation de l'orientation de la ligne de visée par $(G_1, S_1, R_1)$.

A ce niveau de l'algorithme, le résultat, bien qu'imprécis est déjà fortement indépendant de la valeur de I de l'initialisation en utilisation réelle. En effet le produit $RI^{-1}$, quel que soit le montage du capteur sur le casque est toujours lié à la ligne de visée. La valeur de I trouvée lors de la cartographie correspond à un réglage particulier du casque.

Une fonction $F_r$ tenant compte de la présence du casque et modélisant directement la ligne de visée théorique $(G_2, S_2, R_2)$ à partir de $G_1, S_1, R_1$ et $r^7 \ ^tMM$ est alors déterminée.

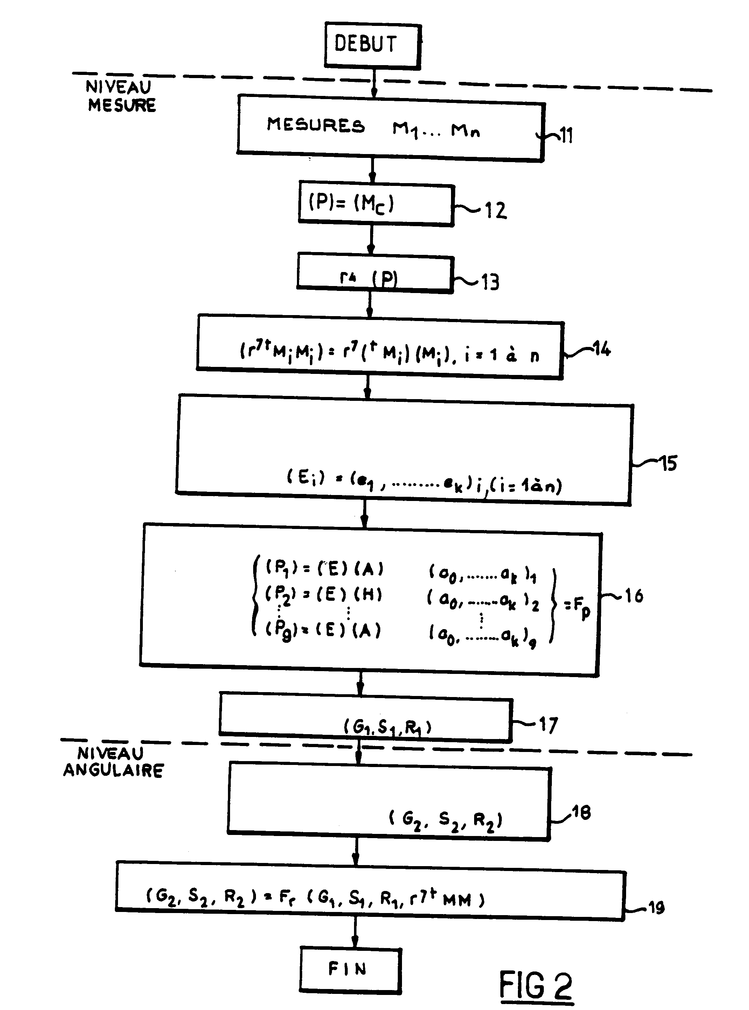

La figure 2 illustre de manière synthétique les différentes étapes de la phase de modélisation du procédé de détermination d'orientation selon l'invention dans sa première version indiquée ci-dessus :

- La première étape est l'étape d'acquisition de matrices de mesure $M_1 ... M_n$ pour un ensemble de n positions de m, pour une orientation donnée du capteur ;
- La seconde étape 12 est l'identification de la matrice P à la matrice de mesure (Mc) correspondant à la position du capteur coïncidant avec le repère de la cartographie ;
- La troisième étape 13 est le calcul de r, puis de la matrice $r^4$ (P) comme indiqué ci-dessus ;
- La quatrième étape est l'étape de calcul pour toutes les matrices de mesures $M_i$ de $(r^7 \ ^tM_iM_i)$ $= r^7(^tM_i)(M_i)$ pour i = 1 à n ;
- La cinquième étape 15 est l'étape de calcul des n ensembles de régresseurs $(E_i) = (e_1 ... e_k)_i$ pour i = 1 à n ;
- La sixième étape 16 est l'étape de résolution des 9 systèmes d'équation P = E.A au sens des moindres carrés, pour déterminer les ensembles de coefficients $(a_0 ... a_k)_1 ... (a_0 ... a_k)_9$ formant la fonction de modélisation $F_P$ ;
- La septième étape 17 permet de trouver à partir de cette fonction de modélisation, une première approximation de la matrice de cartographie Mc et donc de la rotation capteur rapport au repère de la cartographie $[G_1, S_1, R_1]$.

Cette étape termine le niveau mesure initial.

Puis, pour le niveau dit "angulaire", une étape 18 d'acquisition de mesures pour diverses orientations connues du capteur est effectuée.

Une étape de calcul 19, permet alors à partir de ces mesures, de rechercher la fonction globale $F_r$.

Une variante du procédé selon l'invention permettant d'éviter la première étape d'acquisition de mesures (capteur dans une orientation fixe déplacé seul) consiste à calculer, pour chaque mesure avec casque, une matrice de mesure virtuelle Mv telle que : Lv = HMvM$^{-1}$I$^{-1}$ H$^{-1}$ Lvo

I peut bien sûr être déterminé à partir d'une cartographie avec capteur en orientation fixe et de la fonction Fp correspondante. Mais il est préférable de le déterminer par une méthode itérative, comme décrit ci-après.

A chaque phase de l'itération, la matrice de rotation I de (G, S, R) choisie conduit à une série de mesures virtuelles Mv à partir desquelles est calculée une fonction $F'_p$, par optimisatfon, pour que MvM$^{-1}$-ILvo soit le plus proche possible de Lv, par la relation $r^4$ Mv = $F'_p$($r^7$ $^t$MM).

A l'issue de l'itération, on obtient la valeur de I et simultanément les mesures virtuelles Mv associées.

Les mesures virtuelles apportent un gain par rapport aux mesures précédentes car elles gomment la distorsion liée à la rotation du capteur et intègrent les déformations dues aux masses perturbantes liées au casque.

De plus la recherche itérative de I permet d'éviter la phase de mesures initiales à partir du capteur seul en orientation fixe.

Enfin la fonction F'p est également optimisée. Le temps de calcul pour la modélisation est évidemment un peu plus long, tout en restant acceptable, du fait de l'optimisation de I.

La dernière étape reste alors le calcul de la fonction $F_r$ modélisant directement la ligne de visée théorique à partir de la meilleure fonction F'p, qui est effectuée à partir des mêmes mesures.

Le procédé est également adapté à une correction directe des distorsions optiques liées au parebrise (ou verrière) du porteur, lors de la visée. Pour cela, ces distorsions sont introduites lors de la détermination de $F_r$, soit par calcul, soit par visées réelles test, automatiquement ou sur commande par le pilote.

Un avantage du procédé selon l'invention est que la détermination préalable d'une fonction compacte de modélisation permet de tenir compte des aberrations d'un système magnétique de détection de position et d'orientation lorsqu'un tel système est utilisé dans un environnement métallique perturbateur, type cabine d'hélicoptère. Cette fonction compacte de modélisation est déterminée à partir de mesures expérimentales effectuées pour des positions connues du repère capteur ou directement de la ligne de visée. Ensuite, en cours de vol, l'exploitation du système en temps réel est rapide, conduit à des mesures fiables, et ne nécessite que peu d'espace mémoire dans le système embarqué.

L'invention n'est pas limitée aux modes de réalisation précisément décrits ci-dessus. En particulier, au niveau mesure qui aboutit à l'obtention des paramètres de modélisation des mesures de référence, l'identification des composantes de la mesure à un polynôme a été décrite comme étant effectuée par régression linéaire sur les 6 termes de $r^7$ $^t$MM.

Pour améliorer cette étape, il est possible d'effectuer une régression linéaire sur un nombre supérieur de termes, par exemple 9, en ajoutant aux 6 termes de $r^7$ $^t$MM, les 3 produits scalaires en ligne de la matrice M, ces termes étant significatifs de la rotation, ou encore 3 termes $\mu_i$ définis par $r^4$(M)$_{ii}$ = $r^7\mu_i$($^t$MM)$_{ii}$, c'est-à-dire des termes reliant les termes diagonaux de M aux termes diagonaux de $^t$MM. Dans ces deux cas la fonction Fp est alors déterminée à partir de 220 régresseurs.

Une autre possibilité consiste à utiliser les termes $\mu_i$ décrits ci-dessus, sauf pour les produits où n'apparaissent aucun terme de la matrice $^t$MM. Pour ces produits, les $\mu_i$ sont remplacés par les produits scalaires en ligne de la matrice M.

De plus, il a été indiqué ci-dessus que la recherche des coefficients liant une composante de P aux différents termes de $^t$MM était facilitée par une homogénéisation du type :

$$r^4 P = Fp(r^7 \, ^t MM)$$

En pratique, d'une manière analogue à celle décrite pour l'optimisation de I dans la variante décrite, il est possible d'effectuer une optimisation itérative (par la méthode de FIBONACCI par exemple) sur l'exposant de r. L'expérience montre que cette optimisation peut conduire à remplacer $r^7$ par $r^{ex}$ où ex a une valeur non entière comprise par exemple entre 6,5 et 7 et qui peut dépendre de l'environnement.

Par ailleurs, en ce qui concerne la modélisation des écarts angulaires et le calcul de la ligne de visée qui résulte de la rotation précise, une simplification permettant de gagner en temps le calcul peut être mise en oeuvre. Pour cela la matrice 3x3, ROT = McM$^{-1}$MoMco$^{-1}$ est calculée et les 9 termes de cette matrice ROT sont utilisés comme régresseurs pour la modélisation directe d'écarts angulaires sur G, S ou R. $F_r$ est alors telle que G (ou S, ou R) = $F_r$ (ROT).

Une méthode voisine consiste à modéliser les écarts sur les termes de la matrice ROT elle-même, chaque composante de la matrice ROT = McM$^{-1}$MoMco$^{-1}$ étant exprimée à partir d'un polynôme composé des 9 composantes issues de la première étape. Les angles sont alors extraits de la matrice après régression.

Le lecteur comprendra aisément que d'autres modifications peuvent être faites, notamment pour effectuer des calculs plus rapides ou pour améliorer la précision des résultats obtenus sans sortir du cadre de l'invention, c'est-à-dire toujours en effectuant une phase préalable de modélisation des relations complexes reliant les mesures réelles à la position du capteur, ou à l'orientation de la ligne de visée qui lui est liée.

Dans un exemple de réalisation de la variante utilisant des orientations prédéterminées de la ligne de visée, la modélisation a été obtenue à partir de 85 orientations et pour chacune de ces orientations 27 points de mesure (i.e. 27 positions de m), soit 9 points équirépartis sur 3 plans équidistants formant un maillage cubique dont le pas est de l'ordre de 3 à 4cm. Les mesures ont été faites pour des valeurs de R=0° et

$G = \{90°, 60°, 30°, 0°, -30°, -60°, -90°\}$

$S = \{40°, 20°, 0°, -20°, -40°\}$ pour $R = 0$

et $R = (+10°, -10°)$

et $G = \{90°, 45°; 0; -45°, -90°\}$

et $S = \{40°, 20°, 0°, -20°, -40°\}$

soit 2295 points de mesure m. Le temps de calcul nécessaire pour la modélisation préalable est fonction de la puissance des moyens de calcul. A titre d'exemple pour l'obtention de Fp à partir de 220 régresseurs, la durée de calcul peut être de l'ordre de 3 heures ; à partir de 84 régresseurs, le calcul d'une fonction de modélisation peut être de l'ordre de 5 minutes.

## Revendications

1. Procédé de détermination d'une orientation liée à un système mobile dans un espace déterminé, utilisant un système magnétique de détection de position et d'orientation comportant un émetteur formé de trois bobines orthogonales ayant une position fixe dans l'espace déterminé et un capteur formé de trois bobines orthogonales fixé au système mobile, r étant la distance entre l'origine du repère émetteur (0) et l'origine du repère capteur (m), un cycle de détection consistant à émettre successivement dans les trois bobines de l'émetteur et à mesurer les composantes de champ générées dans les bobines du récepteur, le procédé comportant une phase préalable de modélisation de l'espace déterminé qui consiste

   - à effectuer des mesures des champs magnétiques dans le capteur pour un ensemble de positions connues du système mobile par rapport à un repère dit repère cartographique et à acquérir pour chaque point correspondant à ces positions et pour une orientation donnée du capteur une matrice de mesures, M, et étant caractérisé en ce que la phase préalable de modélisation consiste de plus
   - à calculer des paramètres de modélisation déduits des mesures de référence en chaque dit point par identification, par régression linéaire, des composantes d'une matrice de mesure (P) correspondant à la position du capteur coïncidant avec le repère de cartographie et prise comme base, à des polynômes obtenus à partir de régresseurs calculés à partir des termes des matrices ${}^t$MM, eux-mêmes calculés à partir des différentes matrices de mesure M, les produits ${}^t$MM étant supposés invariants du fait que les matrices de mesures se déduisent les unes des autres par rotation, pour en déduire la rotation relative du capteur ($G_1$, $S_1$, $R_1$) dans le repère cartographique des mesures de référence, ces paramètres de modélisation formant une fonction compacte de modélisation ($F_p$) des effets perturbateurs, fonction de la position,

   et en ce que, en cours d'utilisation, l'orientation courante du système mobile est déterminée directement à partir de la fonction de modélisation position ($F_p$).

2. Procédé selon la revendication 1, caractérisé en ce que la phase préalable de modélisation est complétée par une seconde phase pour améliorer la précision de la rotation relative obtenue à l'étape précédente, par modélisation des écarts angulaires entre des rotations vraies ($G_2$, $S_2$, $R_2$) et la rotation capteur approximée dans la phase précédente ($G_1$, $S_1$, $R_1$), cette rotation précise permettant de calculer l'orientation courante (Lv).

3. Procédé selon la revendication 1, caractérisé en ce que l'orientation courante est calculée à partir de la rotation capteur et en ce qu'une seconde phase est mise en oeuvre pour améliorer la précision de l'orientation courante (Lv) par modélisation des écarts entre des orientations vraies et les orientations correspondantes calculées.

4. Procédé selon l'une des revendications précédentes caractérisé en ce que le calcul de l'orientation courante (Lv) à partir de la rotation capteur comporte une étape d'alignement initial à partir d'une position connue de l'orientation ($Lv_0$), pour déterminer une matrice d'initialisation (I) caractérisant la rotation de la position connue de l'orientation par rapport au repère cartographique.

5. Procédé selon la revendication 1, caractérisé en ce que les paramètres de modélisation résultent de l'identification des composantes de $r^4P$ à $F_p$ ($r^{ex}\,{}^t$MM) où $F_p$ est une fonction polynomiale des composantes de $r^{ex}\,{}^t$MM, ex étant un exposant compris entre 6,5 et 7, l'identification étant effectuée par la méthode des moindres carrés.

6. Procédé selon la revendication 5, caractérisé en ce que l'exposant $\underline{ex}$ est optimisé pour minimiser les écarts.

7. Procédé selon la revendication 6, caractérisé en ce que les paramètres de modélisation résultent de l'identification par régression linéaire des composantes de $r^4P$ à des polynômes obtenus à partir de régresseurs calculés à partir des 6 termes des matrices ${}^tMM$ et des produits scalaires en ligne des matrices M.

8. Procédé selon la revendication 1, caractérisé en ce que les paramètres de modélisation résultent de l'identification, par régression linéaire, des composantes de $r^4P$ à des polynômes obtenus à partir de régresseurs calculés à partir des 6 termes des matrices symétriques ${}^tMM$ et de termes $\mu_i$ définis par $r^4(M)_{ii} = r^7\mu_i{}^tMM)_{ii}$, $r^4(M)_{ii}$ étant les termes diagonaux de la matrice $r^4M$ et $MM_{ii}$ les termes diagonaux de la matrice $r^7\ {}^tMM$.

9. Procédé selon la revendication 1, caractérisé en ce que la fonction compacte de modélisation $(F_p)$ est calculée à partir de matrices de mesures associées à un ensemble d'orientations définies à partir d'une orientation fixe, des matrices de mesures virtuelles (Mv) étant déduites de ces orientations définies (Lv) et des matrices de mesure correspondantes (M).

10. Procédé selon la revendication 9, caractérisé en ce qu'un alignement destiné à évaluer la rotation initiale (I) de l'orientation fixe (Lvo) par rapport au repère cartographique est effectué en même temps que le calcul des matrices de mesures virtuelles (Mv) par une méthode itérative permettant d'optimiser une fonction compacte de modélisation F'p telle que $r^4Mv = F'_p\ (r^7\ {}^tMM)$, et $MvM^{-1}$-$ILvo$ étant le plus proche possible de Lv.

11. Procédé selon l'une des revendications 2 et 3, caractérisé en ce que la modélisation des écarts angulaires est effectuée à partir de rotations vraies connues $(G_2, S_2, R_2)$ et des matrices de mesures relevées associées, par identification des composantes rotations vraies connues $(G_2, S_2, R_2)$ à des polynômes constitués à partir de régresseurs calculés sur les termes des matrices $r^7({}^tMM)$ et sur les angles des rotations approximées $(G_1, S_1, R_1)$, les coefficients résultant formant la fonction de modélisation $(F_r)$ des effets perturbateurs fonction de la rotation.

12. Procédé selon l'une des revendications 2 et 3, caractérisé en qu'une matrice de rotation $ROT = McM^{-1}MoMco^{-1}$ est calculée à partir de chaque matrice de mesure M, Mc étant la matrice résultant de M après application de la fonction de modélisation position $(F_p)$ et Mo et Mco étant les matrices M et Mc pour une orientation fixe connue d'initialisation (Lvo), et en ce que la modélisation des écarts angulaires est effectuée par identification des rotations vraies connues $(G_2, S_2, R_2)$ à des polynômes constitués à partir de régresseurs calculés sur les termes des matrices ROT, les coefficients résultant formant la fonction de modélisation $(F_r)$ des effets perturbateurs fonction de la rotation.

13. Procédé selon l'une quelconque des revendications 2 et 3, caractérisé en ce qu'une matrice de rotation $ROT = MCM^{-1}MoMco^1$ est calculée à partir de chaque matrice de mesure M, Mc étant la matrice résultant de M après application de la fonction de modélisation position $(F_P)$ et Mo et Mco étant les matrices M et Mc pour une orientation fixe connue d'initialisation (Lvo), et en ce que la modélisation des écarts angulaires est effectuée par identification des termes de la matrice ROT à des polynômes constitués à partir de régresseurs calculés sur les termes de la matrice ROT, les coefficients résultant formant la fonction de modélisation $(F_r)$ des effets perturbateurs fonction de la rotation.

14. Dispositif de détermination d'une orientation liée à un système mobile comportant un émetteur (1) formé de trois bobines magnétiques orthogonales ayant une position fixe dans un espace déterminé et un capteur (2) formé de trois bobines orthogonales fixé au système mobile, dispositif qui comporte :
   - des moyens de déplacement du capteur et de l'orientation qui lui est liée selon un ensemble de positions connues, des moyens d'émission de champ (20) par l'émetteur (1) et de mesure de champ par le capteur (2) couplés à des moyens de calcul (10), pour effectuer, dans une phase de modélisation, des mesures des champs magnétiques dans le capteur pour un ensemble de positions connues du système mobile par rapport à un repère dit repère cartographique et acquérir pour chaque point correspondant à ces positions et pour une orientation donnée du capteur une matrice de mesures M, et effectuer en cours d'utilisation des mesures courantes des champs magnétiques dans le capteur, le dispositif étant caractérisé par
   - un calculateur de modélisation (60) couplé aux moyens de calcul (10) via un circuit d'interface (50) qui contient, sous forme logicielle, les algorithmes destinés à la modélisation préalable de l'espace correspondant pour calculer des paramètres de modélisation déduits des mesures de référence en chaque dit point par identification, par régression linéaire, des composantes d'une matrice de mesure (P), correspondant à la position du capteur coïncidant avec le repère de cartographie et prise comme base, à des polynômes obtenus à partir de régresseurs calculés à partir des termes des matrices $^tMM$, eux-mêmes calculés à partir des différentes matrices de mesure M, les produits $^tMM$ étant supposés invariants du fait que les matrices de mesures se déduisent les unes des autres par rotation, pour en déduire la rotation relative du capteur ($G_1$, $S_1$, $R_1$) dans le repère cartographique des mesures de référence, ces paramètres de modélisation formant une fonction compacte de modélisation ($F_p$) des effets perturbateurs, fonction de la position, l'orientation courante du système mobile en cours d'utilisation étant déterminée directement à partir des mesures courantes des champs magnétiques dans le capteur et de la fonction de modélisation position ($F_p$).

## Patentansprüche

1. Verfahren zur Bestimmung einer mit einem beweglichen System in einem bestimmten Raum verknüpften Ausrichtung unter Verwendung eines magnetischen Systems zur Erfassung der Position und der Ausrichtung mit einem aus drei orthogonalen Spulen gebildeten Sender, der in dem bestimmten Raum eine feste Position einnimmt, und mit einer aus drei orthogonalen Spulen bestehenden Sonde, die mit dem beweglichen System fest verbunden ist, wobei r der Abstand zwischen dem Ursprung (O) des Bezugssystems des Senders und dem Ursprung (m) des Bezugssystems der Sonde ist, wobei ein Erfassungszyklus darin besteht, nacheinander Signale über die drei Sendespulen auszusenden und die in den Spulen der Sonde erzeugten Feldkomponenten zu messen, wobei das Verfahren eine vorbereitende Phase der Modellbildung des bestimmten Raums enthält, die darin besteht,
- Messungen der Magnetfelder in der Sonde für eine Gruppe bekannter Positionen des beweglichen Systems bezüglich eines kartographischen Bezugssystems durchzuführen und für jeden Punkt entsprechend diesen Positionen und für eine gegebene Ausrichtung der Sonde eine Meßwertmatrix M zu erfassen, dadurch gekennzeichnet, daß die vorbereitende Modellbildungsphase außerdem darin besteht, Modellbildungsparameter zu berechnen, die aus den Bezugsmessungen in jedem der Bezugspunkte mittels linearer Regression durch Identifizierung der Komponenten einer Meßwertmatrix (P) entsprechend der Position der Sonde, die mit dem kartographischen Bezugssystem koinzidiert und als Basis verwendet wird, hinsichtlich von Polynomen abgeleitet werden, die ausgehend von anhand der Größen der Matrizen $^tMM$ berechneten Regressoren erhalten werden, wobei diese Matrizen ihrerseits aus den verschiedenen Meßmatrizen M berechnet werden und die Produkte $^tMM$ als konstant angenommen werden, da die Meßmatrizen sich voneinander durch Rotation ableiten, um schließlich daraus die relative Drehung der Sonde ($G_1$, $S_1$, $R_1$) im kartographischen Bezugssystem der Bezugsmessungen abzuleiten, wobei diese Modellbildungsparameter eine kompakte Modellbildungsfunktion ($F_p$) der Störeffekte abhängig von der Position bilden, und daß während des späteren Betriebs die laufende Ausrichtung des beweglichen Systems unmittelbar ausgehend von der Modellbildungsfunktion hinsichtlich der Position ($F_p$) bestimmt wird.

2. Verfahren nach Anspruch 1, dadurch gekennzeichnet, daß die vorbereitende Modellbildungsphase durch eine zweite Phase ergänzt wird, um die Genauigkeit der relativen Drehung aus dem vorhergehenden Verfahrensschritt durch Modellbildung der Winkelabstände zwischen den wahren Drehungen ($G_2$, $S_2$, $R_2$) und der in der vorhergehenden Phase angenähert ermittelten Drehung der Sonde ($G_1$, $S_1$, $R_1$) zu verbessern, wobei diese genaue Drehung die Berechnung der laufenden Ausrichtung (Lv) erlaubt.

3. Verfahren nach Anspruch 1, dadurch gekennzeichnet, daß die laufende Ausrichtung ausgehend von der Drehung der Sonde berechnet wird und daß eine zweite Phase durchgeführt wird, um die Genauigkeit der laufenden Ausrichtung (Lv) durch Modellbildung der Abstände zwischen den wahren Ausrichtungen und den entsprechenden berechneten Ausrichtungen zu verbessern.

4. Verfahren nach einem der vorhergehenden Ansprüche, dadurch gekennzeichnet, daß die Berechnung der laufenden Ausrichtung (Lv) ausgehend von der Drehung der Sonde einen Verfahrensschritt enthält, in dem ausgehend von einer bekannten Ausrichtungsposition ($Lv_0$) eine ursprüngliche Fluchtung durchgeführt wird, um eine Initialisierungsmatrix (I) zu bestimmen, die die Drehung der bekannten Position der Ausrichtung bezüglich des kartographischen Bezugssystems kennzeichnet.

5. Verfahren nach Anspruch 1, dadurch gekennzeichnet, daß die Modellbildungsparameter aus der Identifizierung der Komponenten von $r^4P$ hinsichtlich $F_p$ ($r^{ex}$ $^tMM$) resultieren, wobei $F_p$ eine Polynomialfunktion der Komponenten von $r^{ex}$ $^tMM$ ist und "ex" ein Exponent zwischen 6,5 und 7 ist, wobei die Identifizierung durch die Methode der kleinsten Quadrate erfolgt.

6. Verfahren nach Anspruch 5, dadurch gekennzeichnet, daß der Exponent ex so optimiert ist, daß die Abstände möglichst klein werden.

7. Verfahren nach Anspruch 6, dadurch gekennzeichnet, daß die Modellbildungsparameter aus der Identifizierung der Komponenten von $r^4P$ durch lineare Regression hinsichtlich der Polynome resultieren, die von Regressoren stammen, die aus den sechs Größen der Matrix $^tMM$ und der Zeilenskalarprodukte der Matrix M berechnet werden.

8. Verfahren nach Anspruch 1, dadurch gekennzeichnet, daß die Modellbildungsparameter aus der Identifizierung der Komponenten von $r^4P$ durch lineare Regression hinsichtlich der Polynome resultieren, die aus Regressoren erhalten werden, welche von den sechs Größen der symmetrischen Matrizen $^tMM$ und von Größen $\mu_i$ erhalten werden, die definiert sind durch $r^4(M)_{ii} = r^7\mu_i{}^tMM)_{ii}$, wobei $r^4(M)_{ii}$ die diagonalen Größen der Matrix $r^4M$ und $^tMM_{ii}$ die diagonalen Größen der Matrix $r^7$ $^tMM$ sind.

9. Verfahren nach Anspruch 1, dadurch gekennzeichnet, daß die kompakte Modellbildungsfunktion ($F_p$) ausgehend von Meßmatrizen berechnet wird, die einer Gruppe von definierten Ausrichtungen ausgehend von einer festen Ausrichtung zugeordnet sind, wobei virtuelle Meßmatrizen (Mv) aus diesen definierten Ausrichtungen (Lv) und den entsprechenden Meßmatrizen (M) abgeleitet werden.

10. Verfahren nach Anspruch 9, dadurch gekennzeichnet, daß eine Fluchtung, die dazu bestimmt ist, die ursprünglich Drehung (I) der festen Ausrichtung (Lvo) bezüglich des kartographischen Bezugssystems zu bewerten, gleichzeitig mit der Berechnung der virtuellen Meßmatrizen (Mv) durch eine iterative Methode durchgeführt wird, die eine Optimierung einer kompakten Modellbildungsfunktion F'p erlaubt, derart, daß gilt $r^4Mv = F'_p(r^7$ $^tMM)$ und $MvM^{-1}ILvo$ so nahe wie möglich bei Lv liegt.

11. Verfahren nach einem der Ansprüche 2 und 3, dadurch gekennzeichnet, daß die Modellbildung der Winkelabstände ausgehend von bekannten wahren Drehungen ($G_2$, $S_2$, $R_2$) und den zugeordneten erfaßten Meßmatrizen durch Identifizierung der bekannten wahren Rotationskomponenten ($G_2$, $S_2$, $R_2$) hinsichtlich Polynomen erfolgt, die aus Regressoren gebildet werden, welche aufgrund der Werte der Matrizen $r^7$ ($^tMM$) und der angenäherten Rotationswinkel ($G_1$, $S_1$, $R_1$) berechnet werden, wobei die resultierenden Koeffizienten die Modellbildungsfunktion ($F_r$) der rotationsabhängigen Störeffekte bilden.

12. Verfahren nach einem der Ansprüche 2 und 3, dadurch gekennzeichnet, daß eine Rotationsmatrix ROT = $McM^{-1}MoMco^{-1}$ ausgehend von jeder Meßmatrix M berechnet wird, wobei Mc die aus M resultierende Matrix nach Anwendung der Positionsmodellbildungsfunktion ($F_p$) und Mo sowie Mco die Matrizen M bzw. Mc für eine bekannte feste Initialisierungausrichtung (Lvo) sind, und daß die Modellbildung der Winkelabstände durch Identifizierung der bekannten wahren Drehungen ($G_2$, $S_2$, $R_2$) hinsichtlich Polynomen erfolgt, die aus von den Größen der Matrizen ROT berechneten Regressoren gebildet werden, wobei die resultierenden Koeffizienten die Modellbildungsfunktion ($F_r$) der rotationsabhängigen Störeffekte bilden.

13. Verfahren nach einem beliebigen der Ansprüche 2 und 3, dadurch gekennzeichnet, daß eine Rotationsmatrix ROT = $McM^{-1}$-$MoMco^{-1}$ ausgehend von jeder Meßmatrix M berechnet wird, wobei Mc die aus M resultierende Matrix nach Anwendung der Positionsmodellbildungsfunktion ($F_p$) und Mo sowie Mco die Matrizen M bzw. Mc für eine bekannte feste Initialisierungsausrichtung (Lvo) sind, und daß die Modellbildung der Winkelabstände durch Identifizierung der Größen der Matrix ROT hinsichtlich der Polynome erfolgt, die ausgehend von aus den Größen der Matrix ROT berechneten Regressoren gebildet werden, wobei die resultierenden Koeffizienten die Modellbildungsfunktion ($F_r$) der rotationsabhängigen Störeffekte bilden.

14. Vorrichtung zur Bestimmung einer auf ein beliebiges System bezogenen Ausrichtung mit einem aus drei orthogonalen Magnetspulen gebildeten Sender (1), der eine feste Position in einem bestimmten Raum einnimmt, und einer aus drei orthogonalen Spulen bestehenden Sonde (2), die mit dem beweglichen System verbunden ist, wobei die Vorrichtung enthält:
- Mittel zur Verschiebung der Sonde und der ihr zugeordneten Ausrichtung gemäß einer Gruppe von bekannten Positionen, Mittel (20) zum Aussenden eines Feldes durch den Sender (1) und Mittel zur Messung des Feldes in der Sonde (2), die an Rechenmittel (10) gekoppelt sind, um in einer Modellbildungsphase Messungen der Magnetfelder in der Sonde für eine Gruppe von bekannten Positionen des beweglichen Systems bezüglich eines kartographischen Bezugssystems durchzuführen und für jeden Punkt entsprechend diesen Positionen und für eine gegebene Ausrichtung der Sonde eine Meßmatrix M zu erfassen, und um während des späteren Betriebs laufend Messungen der Magnetfelder in der Sonde durchzuführen, gekennzeichnet durch einen Modellbildungsrechner (60), der mit den Rechenmitteln (10) über eine Schnittstellenschaltung (50) gekoppelt ist und in Form eines Programms die Algorithmen enthält, die zur vorbereitenden Modellbildung des entsprechenden Raums bestimmt sind, um Modellbildungsparameter aus den Bezugsmessungen in jedem der erwähnten Punkte durch Identifizierung der Komponenten einer Meßmatrix (P) entsprechend der Stellung der Sonde in Koinzidenz mit dem kartographischen als Basis genommenen Bezugssystem durch lineare Regression hinsichtlich von Polynomen abzuleiten, die aus Regressoren erhalten werden, die von den Größen der Matrizen $^tMM$ berechnet werden, welche ihrerseits ausgehend von den verschiedenen Meßmatrizen M berechnet werden, wobei die Produkte $^tMM$ als unveränderlich angenommen werden, da die Meßmatrizen sich voneinander durch Drehung ableiten, um daraus die relative Drehung der Sonde ($G_1$, $S_1$, $R_1$) in dem kartographischen Bezugssystem der Bezugsmessungen abzuleiten, wobei diese Modellbildungsparameter eine kompakte Modellbildungsfunktion ($F_p$) der Störeffekte abhängig von der Position bilden und wobei die laufende Ausrichtung des beweglichen Systems während der Nutzungsphase unmittelbar aus den laufenden Messungen der magnetischen Felder in der Sonde und aus der Positionsmodellbildungsfunktion ($F_p$) bestimmt wird.

## Claims

1. Method for determining an orientation related to a system which is mobile in a defined space, using a magnetic position and orientation detection system which includes a transmitter formed by three orthogonal coils having a fixed position in the defined space and a sensor, formed by three orthogonal coils, which is attached to the mobile system, r being the distance between the origin (0) of the transmitter reference frame and the origin (m) of the sensor reference frame, a detection cycle consisting in transmitting in succession in the three coils of the transmitter and in measuring the field components generated in the coils of the receiver, the method including a prior phase of modelling the defined space, which consists

   - in carrying out measurements of the magnetic fields in the sensor for a set of known positions of the mobile system with respect to a reference frame called cartographic reference frame and in acquiring, for each point corresponding to these positions and for a given orientation of the sensor, a measurement matrix M, and being characterized in that the prior modelling phase in addition consists
   - in calculating modelling parameters deduced from the reference measurements at each said point by identification, by linear regression, of the components of a measurement matrix (P) corresponding to the position of the sensor coinciding with the cartographic reference frame and taken as base, with polynomials obtained from the regressors calculated from the terms of the matrices $^tMM$, themselves calculated from the various measurement matrices M, the products $^tMM$ being assumed to be invariant because the measurement matrices are deduced from each other by rotation, in order to deduce therefrom the relative rotation of the sensor ($G_1$, $S_1$, $R_1$), in the cartographic reference frame of the reference measurements, these modelling parameters forming a compact modelling function ($F_p$) of the disruptive effects, which is a function of the position,

   and in that, during use, the current orientation of the mobile system is determined directly from the position modelling function ($F_p$).

2. Method according to Claim 1, characterized in that the prior modelling phase is completed by a second phase in order to improve the accuracy of the relative rotation obtained at the previous step, by modelling the angular deviations between true rotations ($G_2$, $S_2$, $R_2$) and the approximate sensor rotation in the previous phase ($G_1$, $S_1$, $R_1$), this precise rotation enabling the current orientation (Lv) to be calculated.

3. Method according to Claim 1, characterized in that the current orientation is calculated from the sensor rotation and in that a second phase is implemented in order to improve the accuracy of the current orientation (Lv) by modelling the deviations between true orientations and the calculated corresponding orientations.

4. Method according to one of the preceding claims, characterized in that the calculation of the current orientation (Lv) from the sensor rotation includes an initial alignment step from a known position of the orientation (Lvo), in order to determine an initialization matrix (I) characterizing the rotation of the known position of the orientation with respect to the cartographic reference frame.

5. Method according to Claim 1, characterized in that the modelling parameters result from the identification of the $r^4P$ components with $F_p$ ($r^{ex}$ $^tMM$) where $F_p$ is a polynomial function of the $r^{ex}$ $^tMM$ components, ex being an exponent lying between 6.5 and 7, the identification being carried out by the method of least squares.

6. Method according to Claim 5, characterized in that the exponent ex is optimized in order to minimize the deviations.

7. Method according to Claim 6, characterized in that the modelling parameters result from the identification, by linear regression, of the $r^4P$ components with polynomials obtained from regressors calculated from the 6 terms of the $^tMM$ matrices and of the on-line scalar products of the matrices M.

8. Method according to Claim 1, characterized in that the modelling parameters result from the identification, by linear regression, of the $r^4P$ components with polynomials obtained from regressors calculated from the 6 terms of the symmetric matrices $^tMM$ and of the terms $\mu_i$ defined by $r^4(M)_{ii} = r^7 \mu_i {}^t MM)_{ii}$, $r^4(M)_{ii}$ being the diagonal terms of the matrix $r^4M$ and $^tMM_{ii}$ being the diagonal terms of the matrix $r^7$ $^tMM$.

9. Method according to Claim 1, characterized in that the compact modelling function ($F_p$) is calculated from measurement matrices associated with a set of orientations defined from a fixed orientation, virtual measurement matrices (Mv) being deduced from these defined orientations (Lv) and from corresponding measurement matrices (M).

10. Method according to Claim 9, characterized in that an alignment intended to evaluate the initial rotation (I) of the fixed orientation (Lvo) with respect to the cartographic reference frame is carried out at the same time as the calculation of the virtual measurement matrices (Mv) by an iterative method making it possible to optimize a compact modelling function $F'_p$ such as $r^4Mv = F'_p(r^7$ $^tMM)$, and $MvM^{-1}ILvo$ being the closest possible to Lv.

11. Method according to one of Claims 2 and 3, characterized in that the modelling of the angular deviations is carried out from known true rotations $(A_2, E_2, R_2)$ and from the associated determined measurement matrices, by identification of the known true rotation components $(A_2, E_2, R_2)$ with polynomials constituted from regressors calculated on the terms of the matrices $r^7({}^tMM)$ and on the angles of the approximate rotations $(G_1, S_1, R_1)$, the resulting coefficients forming the modelling function $(F_r)$ of the disruptive effects, which is a function of the rotation.

12. Method according to one of Claims 2 and 3, characterized in that a rotation matrix $ROT = McM^{-1}MoMCo^{-1}$ is calculated from each measurement matrix M, Mc being the resulting matrix of M after application of the position modelling function $(F_p)$ and Mo and Mco being the matrices M and Mc for a known fixed initialization orientation (Lvo), and in that the modelling of the angular deviations is carried out by identification of the known true rotations $(G_2, S_2, R_2)$ with polynomials constituted from regressors calculated on the terms of the matrices ROT, the resulting coefficients forming the modelling function $(F_r)$ of the disruptive effects, which is a function of the rotation.

13. Method according to either of Claims 2 and 3, characterized in that a rotation matrix $ROT = McM^{-1}MoMco^{-1}$ is calculated from each measurement matrix M, Mc being the resulting matrix of M after application of the position modelling function $(F_p)$ and Mo and Mco being the matrices M and Mc for a known fixed initialization orientation (LVo), and in that the modelling of the angular deviations is carried out by identification of the terms of the matrix ROT with polynomials constituted from regressors calculated on the terms of the matrix ROT, the resulting coefficients forming the modelling function $(F_r)$ of the disruptive effects, which is a function of the rotation.

14. Device for determining an orientation related to a mobile system, including a transmitter (1) formed by three orthogonal magnetic coils having a fixed position in a defined space and a sensor (2) formed by three orthogonal coils, attached to the mobile system, which device includes:
    - means for moving the sensor and the orientation which is related to it according to a set of known positions, means (20) of transmission of field by the transmitter (1) and of measurement of field by the sensor (2), these means being coupled to calculating means (10), in order to carry out, in a modelling phase, measurements of the magnetic fields in the sensor for a set of known positions of the mobile system with respect to a reference frame called the cartographic reference frame and to acquire, for each point corresponding to these positions and for a given orientation of the sensor, a measurement matrix M, and to carry out, during use, current measurements of the magnetic fields in the sensor, the device being characterized by

- a modelling calculating machine (60) coupled to the calculating means (10) via an interface circuit (50) which contains, in the form of software, the algorithms intended for the prior modelling of the corresponding space in order to calculate modelling parameters deduced from the reference measurements at each said point by identification, by linear regression, of the components of a measurement matrix (P), corresponding to the position of the sensor coinciding with the cartographic reference frame and taken as base, with polynomials obtained from regressors calculated from the terms of the matrices $^tMM$, themselves calculated from the various measurement matrices M, the products $^tMM$ being assumed to be invariant because the measurement matrices are deduced from each other by rotation, in order to deduce therefrom the relative rotation of the sensor ($G_1$, $S_1$, $R_1$) in the cartographic reference frame of the reference measurements, these modelling parameters forming a compact modelling function ($F_p$) of the disruptive effects, which is a function of the position, the current orientation of the mobile system during use being determined directly from the current measurements of the magnetic fields in the sensor and from the position modelling function ($F_p$).

# FIG.1

Repère émetteur

1

20 AMPLI-
FICATEUR

2

Repère capteur

m

Lv

MODULE
OPTIQUE

40 MODULE DE
CONNEXION

10

30

PANNEAU
DE
COMMANDE

UNITÉ
CENTRALE

BUS

ALIMENTATION

50 CIRCUIT
D'INTERFACE

CALCULATEUR DE
MODÉLISATION

60

DEBUT

NIVEAU
MESURE

MESURES $M_1 \dots M_n$ 11

$(P) = (M_C)$ 12

$r^4 \ (P)$ 13

$(r^{7\,t}M_i M_i) = r^7 (^t M_i)(M_i), \ i = 1 \ \text{à} \ n$ 14

$(E_i) = (e_1, \dots e_k)_i, (i = 1 \text{àn})$ 15

$$\begin{cases} (P_1) = (E)(A) \\ (P_2) = (E)(H) \\ \quad \vdots \\ (P_9) = (E)(A) \end{cases} \left. \begin{array}{l} (a_0, \dots a_k)_1 \\ (a_0, \dots a_k)_2 \\ \quad \vdots \\ (a_0, \dots a_k)_9 \end{array} \right\} = F_p \quad 16$$

$(G_1, S_1, R_1)$ 17

NIVEAU
ANGULAIRE

$(G_2, S_2, R_2)$ 18

$(G_2, S_2, R_2) = F_r \ (G_1, S_1, R_1, r^{7\,t} MM)$ 19

FIN

FIG 2